(19) Europäisches Patentamt
European Patent Office
Office européen des brevets

(11) Veröffentlichungsnummer: **0 395 955 B1**

(12) **EUROPÄISCHE PATENTSCHRIFT**

(45) Veröffentlichungstag der Patentschrift: **23.02.94**

(51) Int. Cl.[5]: **C09D 17/00**, D06P 3/00

(21) Anmeldenummer: **90107528.3**

(22) Anmeldetag: **20.04.90**

# (54) Pigmentpräparationen.

(30) Priorität: **03.05.89 DE 3914568**

(43) Veröffentlichungstag der Anmeldung:
**07.11.90 Patentblatt 90/45**

(45) Bekanntmachung des Hinweises auf die Patenterteilung:
**23.02.94 Patentblatt 94/08**

(84) Benannte Vertragsstaaten:
**CH DE FR GB IT LI**

(56) Entgegenhaltungen:
**EP-A- 0 341 053**
**DE-A- 2 525 926**
**US-A- 4 812 492**

**DATABASE WPI, No.80-64 921 DERWENT PUBLICATIONS LTD ., London, GB; & JP-A-55 099 951**

(73) Patentinhaber: **BAYER AG**
**D-51368 Leverkusen(DE)**

(72) Erfinder: **Tork, Leo, Dr.**
**Corso Mazzini 38/B5**
**I-36071 Arignano (Vicenza)(IT)**
Erfinder: **Träubel, Harro, Dr.**
**Dresdener Strasse 14**
**D-5090 Leverkusen 1(DE)**
Erfinder: **Müller, Hans-Werner**
**Lohnskotter Weg 4**
**D-5000 Köln 80(DE)**
Erfinder: **Höhne, Wolfgang**
**Via Martiri**
**I-36071 Arzignano (Vicenza)(IT)**

EP 0 395 955 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind Pigmentpräparationen und deren Verwendung zum Pigmentieren von Leder- und Kunstlederzurichtungsmitteln.

Es ist bekannt, wasserunlösliche Leder- und Kunstlederzurichtungsmittel auf Basis von Polyurethanen oder wasserunlöslichen Celluloseestern mit Pigmentpräparationen einzufärben. Die dabei verwendeten Pigmentpräparationen enthalten meist neben Pigment und üblichen Zusätzen wie Lösungsmitteln noch Pigmentbindemittel auf Basis von Kollodium, Celluloseacetat, Celluloseacetobutyrat, Ethylcellulose oder Polyvinylchlorid-Polyvinylacetatcopolymerisate, gegebenenfalls unter Zusatz von Weichmachern oder von Weichmachern alleine wie Dibutylphthalat. Diese Pigmentpräparationen beeinflussen die Eigenschaften der Zurichtungsmittel für Leder und Lederimitate und der Fertigartikel oft ungüstig. Einerseits verharten sie das Leder bzw. das Lederimitat, sie vermindern die Naß- und Trockenknickwerte und verschlechtern die Kältefestigkeit, andererseits können sie ausschwitzen. Vor allem die Lichtechtheit und die Vergilbung unter Einfluß von Hitze oder die Haftung werden durch die bekannten Formierungsmittel negativ beeinflußt.

Diese Nachteile versucht man zu vermeiden, indem man als Bindemittel für Pigmente dieselben oder ähnliche Polyurethane einsetzt, wie sie auch als Bindemittel in der Lederzurichtung oder bei der Beschichtung von Kunstleder verwendet werden. Damit können die aufgezeigten Nachteile teilweise behoben werden; es ist jedoch notwendig, daß man auf jede Zurichtung eine genau abgestimmte Pigmentpräparation einsetzen muß, da z.B. Polyurethane untereinander und Polyurethane mit Kollodium und anderen Cellulosederivaten nur sehr bedingt verträglich sind.

Die DE-A-2 525 926 betrifft Pigmentpräparationen auf Basis thermoplastischer Polyurethane aus Diphenylmethan-4,4'-diisocyanat, Neopentylglykol und Adipinsäuremonobutylester. Eine genauere Beschreibung des Polyurethans enthält die DE-OS-2 525 926 nicht; es werden aber weder freie noch blockierte Isocyanatgruppen erwähnt. Die Pigmentpräparationen sollen zum Pigmentieren von Polyurethan-Kunstleder dienen.

Die JP-A-55 099 951 beschreibt Pigmentpasten auf Basis von OH-Gruppen enthaltenden Präpolymeren. Auch hier werden weder freie noch blockierte Isocyanatgruppen erwähnt. Die Pigmentpasten dienen zum Pigmentieren von Polyurethanen.

Die US-A-4 812 492 betrifft wäßrige Pigmentpräparationen, die auch organische Lösungsmittel enthalten können, auf Basis von Polyurethanen. Zweck ist vor allem das Färben von Drucktinten.

Es bestand daher ein Bedürfnis nach Pigmentpräparationen, die universell für alle Leder- und Kunstlederzurichtungsmittel einsetzbar sind und überdies nicht die Nachteile bekannter Pigmentpräparationen aufweisen. Von besonderem Vorzug sind Präparationen, bei denen das Bindemittel in die Zuricht- oder Beschichtungsmasse einpolymerisiert, bzw. einaddiert.

Die Erfindung betrifft Pigmentpräparationen enthaltend A) ein anorganisches und/oder organisches Pigment und eine flüssige Mischung aus B) einem Polyurethan und gegebenenfalls C) einem oder mehreren für Pigmentpräparationen üblichen Zusätzen, wobei das Gewichtsverhältnis A):B) = 1:(0,1-50) ist.

Vorzugsweise ist das Pigment in dem Polyurethan dispergiert.

Bevorzugt sind Präparationen, die A) 2-60 Gew.-%, besonders bevorzugt 5-30 Gew.-%, organisches Pigment oder 2-80 Gew.-%, besonders bevorzugt 10-65 Gew.-%, anorganisches Pigment, B) mindestens 5 Gew.-% Polyurethan und C) 5-90 Gew.-%, besonders bevorzugt 8-30 Gew.-% Zusatz, insbesondere Lösemittel, enthaltend, wobei A) + B) + C) = 100 Gew.-%.

Bevorzugten Polyurethane weisen sterisch behinderte oder blockierte Isocyanatgruppen auf. Ganz besonders bevorzugt sind solche Polyurethane, die unter Anwendungsbedingungen mit den anderen anwesenden Polymeren zu reagieren vermögen.

Die Pigmentpräparationen können gegebenenfalls übliche Zusätze, wie Lösungsmittel, Stellmittel oder Verdickungsmittel, enthalten.

Geeignete Lösemittel sind Alkohole wie Isobutanol, Cyclohexanol, tert.-Butanol, Diacetonalkohol, Ethylglykol, Glykolmonomethylether, Ketone, wie Methylethylketon, Cyclohexanon, Ester wie Essigsäurebutylester, Phthalsäureester wie Phthalsäuredimethylester, Phthalsäuredibutylester, Phthalsäuredioctylester, Phosphorsäureester wie Trikresylphosphat, Adipinsäureester wie Dibutyladipinat, Alkylsulfonsäureester wie Pentadecansulfosäurephenyl- oder -tolylester, d.h. Produkte wie sie z.B. zum Weichmachen von Nitrocellulose oder PVC gemeinhin bekannt sind, oder Methoxy oder Ethoxypropylacetat oder Säureamide, wie Dimethylformamid oder Methylpyrrolidon und anteilmäßig Kohlenwasserstoffe wie Benzol, Toluol oder Xylol. Bevorzugt sind Cyclohexanon, Dimethylformamid oder Methoxypropylacetat.

Besonders bevorzugt werden Lösemittel eingesetzt, die einen Siedepunkt > 120 °C haben.

Vorzugsweise finden OH- oder NH-Gruppen-freie Lösemittel Verwendung. In einer besonderen Ausführungsform werden solche "Lösemittel" verwandt, wie sie z.B. zur Weichmachung von PVC üblich sind; d.h.

Lösemittel, die im Substrat verbleiben können und nicht abgedampft zu werden brauchen.

Die Pigmentpräparationen lassen sich in einfacher Weise durch Dispergieren der Komponenten in einem üblichen Naßzerkleinerungsapparat, beispielsweise einer Rotor-Statormühle, einer Perlmühle oder einer Kugelmühle herstellen. Die Teilchengröße der dispergierten Pigmente soll bei 0,2 bis 2 $\mu$ liegen. Die Pigmente, die in den erfindungsgemäßen Pigmentpräparationen eingearbeitet sind, unterliegen keiner Beschränkung, sie können organischer oder anorganischer Natur sein. Geeignete organische Pigmente sind z.B. solche der Azo-, Anthrachinon-, Azoporphin-, Thioindigo-, Dioxazin-, Naphthalintetracarbonsäure- oder Perylentetracarbonsäure-Reihe sowie verlackte Farbstoffe wie Ca-, Mg- oder Al-Lacke von Sulfonsäure- und/oder Carbonsäuregruppen enthaltenden Farbstoffen, von denen eine große Anzahl beispielsweise aus Colour-Index, 2. Auflage, bekannt sind. Geeignete anorganische Pigmente sind z.B. Zinksulfide, Cadmiumsulfide oder -selenide, Ultramarin, Titandioxide, Eisenoxide, Nickel- oder Chromverbindungen sowie Ruß.

Geeignete Oligourethane sind solche mit Molgewichten von 5 000 bis 50 000. Bevorzugt sind solche eines Molgewichtes von 10 000 bis 50 000 und besonders bevorzugt von 15 000 bis 40 000. Ganz besonders bevorzugt werden Oligourethane eingesetzt, die unter dem Einfluß von Sauerstoff, Licht, Wärme oder Wasser nicht vergilben oder abgebaut werden.

Zur Herstellung der Oligourethane können alle gängigen Polyester, Polyether, Polycarbonate, Polyetherester, Isocyanate und Kettenverlängerungsmittel auf Glykol und/oder Amin-Basis verwandt werden.

Vorzugsweise finden Polyester der Adipin-, Bernstein-, Glutar-, Kohlen-, Phthal-, Terephthal-, Isophthalsäure, (Mono-, Di-, Tri- und Poly-)-ethylen- oder -propylenglykol, Butandiol, Hexandiol, Polycaprolacton, Mischungen der Säuren bzw. Glykole untereinander sowie auch Aminogruppen enthaltende Polyole Verwendung. Vorzugsweise finden Ester der Adipin-, Phthal- und Kohlensäure Verwendung. Polyether auf Basis Ethylenglykol, Propylenglykol, Butandiol (welche auch im Gemisch vorliegen können), die nach bekannten Verfahren auf gegebenenfalls aminierten Alkoholen gestartet sein können, können alleine oder zusammen mit den Estern eingesetzt werden.

Zur Herstellung der Oligourethane sind prinzipiell alle Polyisocyanate geeignet. Bevorzugt werden Polyisocyanate wie gegebenenfalls polymerisiertes Toluylen- oder Methylendiphenyldiisocyanat oder Hexan- oder Isophorondiisocyanat eingesetzt. Ganz besonders bevorzugt sind - wegen ihrer hohen Lichtechtheit - die aliphatischen Isocyanate. Die resultierenden Oligourethane können OH-endständig, isocyanatendständig oder blockiert vorliegen.

Bevorzugt enthalten die Oligourethane sterisch gehinderte freie oder blockierte Isocyanatgruppen.

Die erfindungsgemäß eingesetzen Oligourethane sind vorzugsweise in einem NCO:OH-Verhältnis > 1 hergestellt worden.

Als Blockierungsmittel seien beispielsweise primäre, sekundäre oder tertiäre Alkohole oder Oxime, z.B. Butanonoxim, genannt.

Die blockierten Isocyanatgruppen werden unter den Bedingungen, unter denen die Pigmentpräparationen eingesetzt werden, freigesetzt und vermögen dann z.B. mit Beschichtungsmassen, Überzügen oder Lederzurichtungsmitteln zu reagieren und deren Eigenschaften dadurch zu verbessern.

Organische Lederzurichtungsmittel, die mit den erfindungsgemäßen Pigmentpräparationen eingefärbt werden können, sind beispielsweise in DE-A 1 174 937 und 1 278 064 beschrieben. Mit den erfindungsgemäßen Pigmentpräparationen lassen sich nahezu alle Bindemittel, die in organischen Lösemitteln gelöst sind, pigmentieren. Besonders geeignet sind sie für die Pigmentierung aromatischer und aliphatischer Polyurethan-Einkomponenten-und auch aminhaltiger Zweikomponentensysteme und für Lacke auf Basis von Cellulosederivaten, wie sie für die Zurichtung von Leder oder Ledersubstituten verwendet werden. Die Auswahl der Pigmentpräparationen erfolgt nach dem gewünschten Farbeffekt. Wünscht man hohe Deckkraft, so werden Präparationen anorganischer Pigmente eingesetzt. Soll das behandelte Substrat dagegen einen lasierenden Farbton mit hoher Brillanz zeigen, verwendet man Präparationen mit organischen Pigmenten. Außerdem berücksichtigt man die vom Pigment vorgegebenen Echtheiten, wie Licht- und Migrierechtheit, Hitzebeständigkeit usw.

Besonders sind diese neuartigen Pigmente für den Einsatz in reaktiven Polyurethansystemen geeignet wie sie z.B. im 2-Komponenten-Verfahren gemäß DE-A 33 09 992 oder in "High-Solid-Systemen" (gemäß DE-A 32 39 900) Anwendung finden. Speziell die Ausführungsform, bei der Oligourethane mit sterisch gehinderten oder blockierten Isocyanaten als Formierungsmittel Einsatz finden, ist für diese Anwendungsform geeignet. Hierbei reagiert das Formierungsmittel unter den Anwendungsbedingungen mit den reaktiven Beschichtungsprodukten. Dadurch wird das Formierungsmittel fest in die Beschichtung mit eingebaut.

Die erfindungsgemäßen Pigmentpräparationen haben gegenüber bekannten den Vorteil, daß sie denkbar einfach herzustellen sind, universell einsetzbar sind und die Eigenschaften der zu pigmentierenden Zurichtungsmittel sowie der Substrate nicht nachteilig beeinflussen und insbesondere die von den Pigmenten vorgegebenen Echtheiten nicht verschlechtern. Besonders bevorzugt sind Oligourethane, die Erweichungspunkte zwischen -40 °C und +25 °C besitzen. Nach Abdampfen der gegebenenfalls vorhandenen Lösemittel in Trockenkanälen bilden sie meist bei Raumtemperatur aus ihren Lösungen in organischen Lösemitteln keine geschlossenen Filme. Sie ergeben überraschenderweise keine Zurichtungen mit klebrigem Griff und schlechter Heißreibfestigkeit. Auch weist die Zurichtung eine gute Kältefestigkeit und eine gute Naß- und Trockenknickfestigkeit auf. Andererseits wandern sie auch nicht aus dem Beschichtungs- oder Zurichtsystem aus. Der Zusatz von Weichmachern anstelle von Lösemitteln vom Typ Adipinsäure- oder Phthalsäureester wirkt einer Verhärtung entgegen; falls diese Produkte in Mengen unter 30 %, vorzugsweise unter 10 %, bezogen auf Beschichtungsmittel, eingesetzt werden, migrieren diese Verbindungen nicht.

Bei Verwendung von Mischungen verschiedenartiger Pigmente kommt es bei Pigmentpräparationen mit Bindemitteln auf Cellulosebasis oder Polyvinylacetatbasis häufig zum Ausschwimmen, vor allem der organischen Pigmente. Durch die erfindungsgemäßen Pigmentpräparationen wird dies verhindert und die Verträglichkeit mit den verschiedensten Beschichtungsmitteln optimal verbessert, so daß sie universell zum Anfärben von Bindemitteln, z.B. auch für den Textildruck eingesetzt werden können.

Die folgenden Beispiele sollen der Verdeutlichung der Erfindung dienen.

1. Herstellung der Oligourethane

Beispiel 1.1

In diesem Beispiel wird ein Oligourethan mit blockierten Isocyanatgruppen beschrieben:
1600 g eines Hexandiol-neopentylglykol-adipats der OH-Zahl 63 bis 70 (2000 mmol OH) werden nach gründlichem Entwässern im Vakuum in einem 4 l Rührbecherglas mit 444 g (4000 mmol NCO) Isophorondiisocyanat und 80 g (200 mmol NCO) eines Triisocyanatohexylbiurets solange (d.h. ca. 360 Minuten) bei 90 bis 100 °C umgesetzt, bis der theoretische NCO-Wert erreicht ist und dann mit weiteren 240 g (2760 mmol) Butanonoxim versetzt und weitere 200 Minuten bei 90 bis 100 °C unter Rühren umgesetzt. Anschließend wird mit Di-n-butylphthalat auf 70 % Konzentration gestellt. Es entsteht ein Oligourethan mit 2,80 % blockierten Isocyanatgruppen, das bei 25 °C eine Viskosität von 22 000 mPas aufweist.

Beispiel 1.2

1600 g eines Hexandiol-neopentylglykol-adipats der OH-Zahl 63 bis 70 (2000 mmol OH) werden nach gründlichem Entwässern im Vakuum in einem 4 l Rührbecherglas mit 444 g (4000 mmol NCO) Isophorondiisocyanat und 80 g (200 mmol NCO) eines Triisocyanatohexylbiurets solange (d.h. ca. 360 Minuten) bei 90 bis 100 °C umgesetzt, bis der theoretische NCO-Wert erreicht ist und dann mit weiteren 240 g (2760 mmol) Butanonoxim versetzt und weitere 200 Minuten bei 90 bis 100 °C unter Rühren umgesetzt. Anschließend wird mit Methoxypropylacetat auf 70 % Konzentration gestellt. Es entsteht ein Oligourethan mit 2,80 % blockierten Isocyanatgruppen, das bei 25 °C eine Viskosität von 2300 mPas aufweist.

Beispiel 1.3

2000 g eines Polypropylenglykolethers der OH-Zahl 56 (2000 mmol OH) werden nach gründlichem Entwässern im Vakuum in einem 4 l Rührbecherglas mit 354 g (4200 mmol NCO) Hexamethylendiisocyanat solange (d.h. ca. 300 Minuten) bei 90 bis 100 °C unter Rühren umgesetzt, bis der theoretische NCO-Wert erreicht ist und dann mit weiteren 240 g (2760 mmol) Butanonoxim versetzt und weitere 200 Minuten bei 90 bis 100 °C unter Rühren umgesetzt. Anschließend wird mit Methoxypropylacetat auf 70 % Konzentration gestellt. Es entsteht ein Oligourethan mit 2,70 % blockiertem Isocyanatgruppen, das bei 25 °C eine Viskosität von 200 mPas aufweist.

Beispiel 1.5

2000 g eines Polypropylenglykolethers der OH-Zahl 56 (2000 mmol OH) werden nach gründlichem Entwässern im Vakuum in einem 4 l Rührbecher mit 183 g (2100 mmol NCO) 2,4/2,6-Diisocyanato-1-methylbenzol und 176 g (2100 mmol NCO) Hexamethylendiisocyanat solange (d.h. ca. 200 Minuten) bei 90 bis 100 °C umgesetzt, bis der theoretische NCO-Wert erreicht ist und dann mit weiteren 240 g (2760 mmol) Butanonoxim versetzt und weitere 120 Minuten bei 90 bis 100 °C unter Rühren umgesetzt. Anschließend wird mit Methoxypropylacetat auf 70 % Konzentration gestellt. Es entsteht ein Oligourethan mit 2,68 % blockierten Isocyanatgruppen, das bei 25 °C eine Viskosität von 300 mPas aufweist.

Beispiel 1.6

1600 g eines Hexandiol-neopentylglykol-adipats der OH-Zahl 63 bis 70 (2000 mmol OH) werden nach gründlichem Entwässern im Vakuum in einem 4 l Rührbecherglas mit 610 g (4200 mmol NCO) 1,3,5-Triisopropylbenzol-2,4-diisocyanat (sterisch behindert) solange (d.h. ca. 300 Minuten) bei 90 bis 100 °C umgesetzt, bis der theoretische NCO-Wert erreicht ist und dann mit weiteren 240 g (2760 mmol) Butanonoxim versetzt und weitere 200 Minuten bei 90 bis 100 °C unter Rühren umgesetzt. Anschließend wird mit Methoxypropylacetat auf 70 % Konzentration gestellt. Es entsteht ein Oligourethan mit 2,60 % blockierten Isocyanatgruppen, das bei 25 °C eine Viskosität von 3800 mPas aufweist.

2. Herstellung der Pigmentpräparationen

Beispiel 2.1

1,8 kg Pigmentbindemittel aus Beispiel 1.1 werden mit 1,7 kg Di-n-butylphthalat verdünnt, 6,5 kg Titandioxidpigment (®Bayertitan RFK-2) eingetragen und 15 Minuten mittels Dissolvers bei 2000 U/min gerührt. Nach Abmahlen auf der Perlmühle wird eine gut dispergierte Pigmentpaste erhalten.

Beispiel 2.2

1,8 kg Pigmentbindemittel aus Beispiel 1.2 werden mit 85 g Methoxypropylacetat und 85 g Trimethylbenzol-Gemisch (®Solvesso 100, Fa. ESSO) verdünnt, 6,5 kg Titandioxidpigment (®Bayertitan RFDI) eingetragen und 15 Minuten mittels Dissolvers bei 2000 U pro Min. gerührt. Nach Abmahlen auf der Perlmühle wird eine gut dispergierte Pigmentpaste erhalten.

Beispiel 2.3

2,0 kg Pigmentbindemittel aus Beispiel 1.3 werden mit 6,99 kg Methoxypropylacetat und 10 g Triethanolamin verdünnt, dann wird 1,0 kg Ruß ®Monarch 800 (Fa. Cabot) eingetragen und 20 Minuten mittels eines Dissolvers bei 2000 U/Min. gerührt. Anschließend wird die Rußdispersion auf einer Perlmühle mit Glasperlen von 1 mm Durchmesser bis zur Erzielung der erforderlichen Schwarztiefe und Deckung unter Kühlung ein- bis zweimal abgemahlen.

Beispiel 2.4

1,95 kg Pigmentbindemittel aus Beispiel 1.6 werden mit 1.3 kg Methoxypropylacetat und 1.2 kg Solvesso 100 (Fa. ESSO) verdünnt, 5,5 kg Eisenoxidbraun-Pigment, Typ 645 T (Fa. BAYER AG) eingetragen und 15 Minuten mittels eines Dissolvers bei 2000 U/Min. gerührt. Anschließend wird die dunkelbraune Pigmentdispersion auf einer Perlmühle mit Glasperlen von 1 mm Durchmesser bis zur Erzielung der erforderlichen Farbstärke und Deckung unter Kühlung ein- bis zweimal abgemahlen.

Um Farbpasten gleicher Viskosität mit anderen anorganischen Pigmenten zu erhalten, ist es erforderlich, daß Mengenverhältnis Pigment:Bindemittel und Lösemittel auf das jeweilige Pigment abzustimmen.

Beispiel 2.5

2.6 kg Pigmentbindemittel aus Beispiel 1.5 werden mit 5.7 kg Methoxypropylacetat verdünnt, 1,7 kg ®Novopermrot F5RK (Firma HOECHST AG) eingetragen und 20 Minuten mittels Dissolvers bei 2000 U/Min. gerührt. Anschließend wird die Pigmentdispersion auf einer Perlmühle mit Glasperlen von 1 mm Durchmesser bis zur Erzielung der erforderlichen Farbstärke und Brillanz unter Kühlung ein- bis zweimal abgemahlen.

Beispiel 2.6

2,2 kg Pigmentbindemittel aus Beispiel 1.4 werden mit 6,0 kg Methoxypropylacetat verdünnt, 1,8 kg ®Paliogenrotviolett K 4985 (Firma BASF) eingetragen und 20 Minuten mittels Dissolvers bei 2000 U/Min. gerührt. Anschließend wird die Pigmentdispersion auf einer Perlmühle mit Glasperlen von 1 mm Durchmesser bis zur Erzielung der erforderlichen Farbstärke und Brillanz unter Kühlung ein- bis zweimal abgemahlen.

Gleich gute Pigmentzubereitungen werden erhalten, wenn man statt ®Novopermrot F5RK und ®Paliogenrotviolett K 4984 andere organische Pigmente einsetzt. Um Farbpasten gleicher Konsistenz zu erhalten,

ist es - wie bei den anorganischen Pigmenten in den Beispielen 2.1, 2.2, 2.4 beschrieben - erforderlich, das Mengenverhältnis Pigment:Bindemittel und Lösemittel auf das jeweilige organische Pigment abzustimmen.

Für die Pigmentierung von Acetobutyratlacken (s. Anwendung in Beispiel 3.1) oder von Kollodiumlacken (s. Anwendung in den Beispielen 3.2 und 3.3) oder von Polyurethanlösungen (s. Anwendung in den Beispielen 3,4-3.14) werden diese Pigmentzubereitungen entweder allein oder in Kombination mit den in den Beispielen 2.1 und 2.2 beschriebenen Titandioxid-Pigmentzubereitungen oder mit der Ruß-Pigmentzubereitung (Beispiel 2.3) oder mit den anorganischen Pigmentzubereitungen aus Beispiel 2.4 eingesetzt.

Alle Farbpasten sind untereinander ohne Flokkulations- und Ausschwimmerscheinungen gut mischbar; Aufschüttstellen, Farbstreifen oder Farbtonschwankungen bei der Umkehrbeschichtung treten infolgedessen nicht auf. Die mit den Pigmentzubereitungen eingestellten Nuancen sind jederzeit gut reproduzierbar.

## 3. Pigmentierungen

Beispiel 3.1

Zu einer Lösung, die aus 25 g Celluloseacetobutyrat (Butyrylgehalt 49 %, Viskosität 20 %ig in Aceton bei 20 °C ca. 20 Pas), 5 g Di-n-butylphthalat, 4 g n-Butylstearat, 2 g eines Polyethersiloxans (hergestellt nach DE-OS 32 44 955, Beispiel 1A), 104 g 2-Ethyl-n-hexylacetat, 410 g Methoxypropanol und 410 g n-Butylacetat besteht, werden 40 g der Titandioxidzubereitung aus Beispiel 2.1 gegeben. Nach einer Rührzeit von 5 Minuten erhält man einen anwendungsfertigen Weißlack, der sehr gut verspritzbar ist und außerordentlich stark deckt. Er ist lichtecht, aminfest und vergilbungsbeständig bis 170 °C. Der Lack ist besonders geeignet als stark deckende weiße Schlußappretur auf geschliffenen und vollnarbigen Ledern.

Beispiel 3.2

Zu einer Lösung, die aus 32 g einer esterlöslichen Kollodiumwolle (butanolfeucht, 65 %ig, Normtyp 9 E), 40 g Di-n-butylphthalat, 15 g Rizinusöl, 50 g 2-Ethyl-n-hexylacetat und 813 g Butylacetat besteht, werden unter Rühren 50 g der Rußzubereitung aus Beispiel 2.3 gegeben. Nach einer Rührzeit von 5 Minuten erhält man einen intensiv schwarz gefärbten Kollodiumlack, der mit einer Luft-Spritzpistole gespritzt, besonders geeignet ist als hochglänzende Schlußappretur auf geschliffenen und vollnarbigen Ledern.

Beispiel 3.3

Zu einer Lösung, die aus 53 g einer esterlöslichen Kollodiumwolle (butanolfeucht, 65 %ig, Normtyp 15 E), 24 g Di-n-butylphthalat, 4 g Rizinusöl, 8 g Butylstearat, 110 g 2-Ethyl-n-hexyl-acetat, 12 g Benzylalkohol, 185 g n-Butylacetat, 2 g Triethanolamin, 15 g Di-n-octylnatrium-sulfosuccinat, 12 g eines Anlagerungsproduktes von etwa 20 Mol Ethylenoxid an 1 Mol Nonylphenol besteht, werden 50 g der Rußzubereitung aus Beispiel 2.3 unter Rühren zugegeben. Nach guter Verteilung der Pigmentdispersion wird mit 525 g Wasser emulgiert.

Die erhaltene wasserverdünnbare schwarze Emulsion ist sehr gut geeignet als tiefschwarzes Appreturmittel für thermoplastisch zugerichtete, geschliffene und vollnarbige Leder.

Beispiel 3.4

Zu einer Lösung, die aus 80 g eines Polyurethanharzes (hergestellt nach DE-OS 2 423 764), 130 g tert. Butanol, 100 g Toluol, 250 g Trimethylbenzol-Gemisch (®Solvesso 100, Firma ESSO), 27 g Celluloseacetobutyrat (Butyrylgehalt 49 %, Viskosität 20 %ig in Aceton bei 20 °C ca. 20 Pas), 3 g Polyethersiloxan (hergestellt nach DE-OS 32 44 955, Beispiel 2A), 100 g Methylethylketon, 260 g Methoxypropanol besteht, werden 50 g der Eisenoxid-Zubereitung aus Beispiel 2.4 eingerührt. Der fertige Lack wird mit einer Airless-Spritzpistole gespritzt und hat einen sehr guten Verlauf und ergibt nach Aufbringen auf Leder oder Lederimitat eine glänzende, hochelastische braune Appretur, die besonders als deckende Schlußappretur für Möbelleder geeignet ist.

Beispiel 3.5

Aus der Pigmentzubereitung nach Beispiel 2.2 kann man wie folgt eine pigmentierte Polyurethanlösung, die für die Textilbeschichtung eingesetzt wird, herstellen:

Zu einer Lösung, die aus 25 g eines Polyurethans, 45 ml Dimethylformamid und 30 ml Methylethylketon besteht, werden unter Rühren mit einem Schnellrührer bei einer Drehzahl von 200 bis 300 U/Min. 8 g der Titandioxid-Pigmentzubereitung nach Beispiel 2.2 gegeben. Nach einer Rührzeit von 3 bis 5 Minuten erhält man eine feinverteilte, stabile Pigmentdispersion, die sehr gut für die Textilbeschichtung nach dem Umkehrverfahren geeignet ist. Die damit nach bekannten Verfahren hergestellten Polyurethanfilme auf Textilien sind gleichmäßig und stippenfrei gefärbt. Das verwendete Einkomponenten-Polyurethan wird aus einem Polyester aus Adipinsäure und Hexandiol/Neopentylglykol mit einem mittleren Molekulargewicht von 500 bis 3000 und Diphenylmethan-4,4′-diisocyanat und anschließender Umsetzung mit Butandiol hergestellt.

Beispiel 3.6

Zu einer Lösung, die aus 30 g eines vernetzbaren Polyurethans mit endständigen OH-Gruppen und 70 g Ethylacetat besteht, werden nach Zusatz von 5 g Methylethylketon unter Rühren mit einem Schnellrührer bei einer Drehzahl von 200 bis 300 U/Min. 8 g der Titandioxid-Pigmentzubereitung nach Beispiel 2.2 gegeben. Nach einer Rührzeit von 3 bis 5 Minuten erhält man eine feinverteilte, stabile Pigmentdispersion, die nach Zusatz eines Polyisocyanates, hergestellt durch Umsetzung von 1 Mol Trimethylolpropan und 3 Mol Toluylendiisocyanat, und eines Schwermetallsalzes als Beschleuniger, für die Beschichtung von Textilien nach dem Umkehr- oder Direktverfahren geeignet ist. Die damit nach bekannten Verfahren hergestellten Polyurethanfilme sind gleichmäßig und stippenfrei gefärbt.

Beispiel 3.7

100 g eines 30 %igen aliphatischen Polycarbonat-Polyurethanharnstoffes, hergestellt nach GB-PS 1 418 550, werden mit 15 g eines erfindungsgemäßen Pigmentpräparates aus Beispiel 2.5 an einem mechanischen Rührwerk gemischt und auf ein geprägtes Silicontrennpapier mittels einer feststehenden Rakel oder ähnlich bekannter Streichgeräte aufgebracht. Auflage 30 $g/m^2$ Festsubstanz.

Nach dem Passieren eines auf 80 bis 125 °C erwärmten Trockenkanals und Abkühlen wird die Deckkraft mit einer analog hergestellten anderen Pigmentpräparation verglichen. Die erfindungsgemäße Pigmentanreibung weist eine verbesserte Deckkraft auf.

Beispiel 3.8

Der im Beispiel 3.7 beschriebene Deckstrich reicht nicht aus, deshalb muß ein weiteres aromatisches PUR in DMF:MEK 50:50 mit einer Viskosität von 25 000 mPas/25 °C aufgestrichen werden. Auflage 50 $g/m^2$ fest. Das PUR wird hergestellt aus 2000 g eines Polypropylenglykolethers vom Mol-Gewicht 2000, 200 g Butandiol-1,4 und 800 g 4,4′-Diphenylmethandiisocyanat.

Zur Farbgebung werden 20 g des erfindungsgemäßen Pigmentpräparates aus Beispiel 2.5 intensiv untergemischt.

Beispiel 3.9

1000 g eines blockierten NCO-Prepolymeren gemäß DE-OS 2 902 090 Beispiel 1 hergestellt, werden mit 100 g Pigmentanreibung aus Beispiel 2.3, 90 g 3,3′-Dimethyl-4,4′-diamino-dicyclohexylmethan unter Vakuum und gleichzeitiger Erwärmung auf bis zu 40 °C vermischt. Auflage 200 $g/m^2$ fest; Vernetzungstemperatur 150 bis 160 °C. Als Haftstrich dient das oben beschriebene blockierte NCO-Prepolymere unter Zusatz von Diamin. 50 g Pigmentanreibung aus Beispiele 2.3 und 200 g einer 40 %igen PUR-Dispersion und 30 g eines wasserlöslichen Siliconöls werden unter Zuhilfenahme eines Dispergators innig vermischt.

Diese Paste, die über einen längeren Zeitraum bei Raumtemperatur lagerfähig ist, wird einmal direkt auf ein geprägtes Trennpapier, ein anderes Mal auf eine Siliconmatrize sowie auch auf ein endloses Stahlband aufgetragen; alle diese einstweiligen Substrate können bereits schon eine oder mehrere Schichten haben, die aus den vorbeschriebenen Produkten oder auch anderen Chemikalien (Acylate z.B.) bestehen. Die Produkte werden mittels einer bekannten Streicheinheit (Rakel, Spritzpistole, Druckwalze etc) aufgebracht, unmittelbar danach wird über Walzen endloses Material wie Gewebe, Gewirke, Vliese und koagulierte Gewebe dazukaschiert. Durch Walzen aus unterschiedlichen Materialien (Metall, Gummi bzw. Hartpapier oder Schaumstoff) bestehend, hindurchgeführt und in einen auf 130 bis 170 °C heißen, mittels Umluft erwärmten Trockenkanal geführt.

Am Ende des Trockners wird über Walzen gekühlt und vom Trennträger abgezogen, der wieder verwendet werden kann.

Beispiel 3.10

Die in den Beispielen 2.1 bis 2.6 aufgeführten Pigmentzubereitungen sind sehr gut für die Pigmentierung eines Zweikomponenten-Polyurethans für die Beschichtung von Leder nach dem Umkehrverfahren geeignet. Man geht hierzu wie folgt vor:
200 g p-Toluylendiamin werden in 800 g Methylethylketon unter Rühren im Verlauf von 5 Minuten gelöst. In die gelblich braune Lösung werden 200 g Pigmentzubereitung 2.4 gegeben. Obwohl diese Pigmentdispersion wasserdünn ist, besitzt sie eine Lagerstabilität von mehreren Wochen und ist nach Umsatz mit einem Polyisocyanat sehr gut für die Lederbeschichtung nach dem Umkehrverfahren geeignet. Die damit nach bekannten Verfahren hergestellten Polyurethanfilme sind gleichmäßig und stippenfrei gefärbt. Das verwendete Polyisocyanat wird durch Umsetzung von p-Toluylendiicocyanat mit einem Polyester aus Adipinsäure, Terephthalsäure und Diethylenglykol mit einem mittleren Molgewicht 1000 bis 3000 hergestellt.

Beispiel 3.11

Auf einer Beschichtungsanlage wird mittels einer Zweikomponenten-Mischpistole, wie sie z.B. in US 43 10 493 beschrieben ist, 342 g (262 mmol NCO) des Prepolymeren A (siehe unten) mit 425 g (250 mmol) Diamin-Härter-Lösung verarbeitet. Die Härterlösung war wie folgt zusammengesetzt:
147 Teile 1,1-Bis-(4-amino-3-methylphenyl)-cyclohexan
139 Teile 3-Methyl-2,4-diaminobenzoesäure-(2-ethylhexyl)-ester
2800 Teile Ethylacetat
150 Teile eines formierten Eisenoxidpigments nach Beispiel 2.4
150 g eines Polyetherpolysiloxans der idealisierten Formel

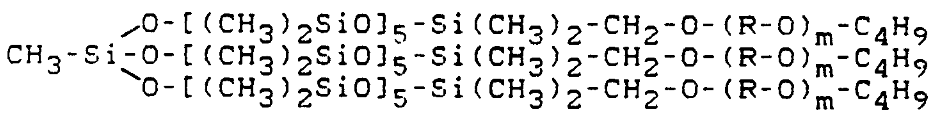

in welcher
m für eine ganze Zahl zwischen 27 und 35 und R für Ethylen- und Propylenreste stehen.

Spaltleder, textile Flächengebilde, Vliese und Non Woven werden nach dem Umkehrverfahren mittels einer PUR-Pistolenspritzmaschine beschichtet, wie sie z.B. in US 43 10 493 beschrieben wird. Die Pistolenspritzmaschine weist auf; als Hauptbestandteil einen heizbaren Vorratsbehälter für das Prepolymer, einen Vorratsbehälter für die Härterzubereitung, jeweils eine Dosiervorrichtung für die Härterzubereitung und das Prepolymerisat und zum Mischen und Verstäuben der Komponenten eine Zweikomponenten-PU-Spritzpistole wie in US 43 10 493, eine beheizbare Zuführung für das Prepolymer, eine Zuführung für den Härter, eine Leitung für Lösemittel und eine Zuführung für Preßluft.

Das Prepolymer wird in den beheizbaren Vorratsbehälter gegeben und zwecks Erniedrigung seiner Viskosität auf 50 °C bis 80 °C erwärmt. Die Härterzubereitung wird in den für sie bestimmten Behälter gegeben. Über getrennte Leitungen mit dazwischenliegenden Dosiervorrichtungen werden Prepolymer und Härterzubereitung in die Pistole gefördert. Die geförderten Mengen bewegen sich im Verhältnis der Äquivalentgewichte von $NCO:NH_2$ in den Mengen von 1,00:1 bis 1,75:1. Der Mengendurchsatz ist variierbar und richtet sich nach der gewünschten Schichtstärke und in Abhängigkeit von der Fläche, die in der Zeiteinheit beschichtet wird, und die Bestandteile der Reaktionsmischung werden im Mischraum und im Mischrohr der Zweikomponenten-PU-Spritzpistole - wie in US 43 10 493 eingehend beschrieben - in kürzester Zeit intensiv vermischt und mittels Preßluft durch die Austrittsdüse gedrückt. Die Reaktion der Komponenten setzt sofort, d.h. bereits während des Mischvorganges ein.

Am Austritt der Pistole wird die Mischung zusätzlich durch mit Preßluft (Betriebsdruck 3 bis 6 $kg/cm^2$) erzeugte Luftwirbel vermischt und die Kegelform des Spritzstrahles in einen Breitstrahl umgewandelt. Die Pistole changiert in einer Breite von 150 cm ca. 25 bis 35 mal pro Minute über einer Siliconkautschuk beschichteten Matrize (die den Abdruck von natürlichem Leder hat) oder einen anderen Trennträger hinüber. Der Trennträger wird mit einer Geschwindigkeit von 2 bis 10 Meter/Minute unter der Pistole durchgeführt. Die auf die Matrize oder den Trennträger gesprühte Masse verläuft filmartig, die Viskosität der Mischung nimmt zu und nach etwa 30 bis 90 Sekunden, vom Zeitpunkt des Aufsprühens an gerechnet, ist ein pastiger Zustand erreicht. Auf bzw. in die reagierende Masse wird das zu beschichtende Spaltleder

oder andere Substrate gelegt und angedrückt. Die gesamte Beschichtung passiert anschließend einen auf 60 bis 120 °C geheizten Trockenkanal. Nach etwa 3 bis 6 Minuten, vom Zeitpunkt des Aufsprühens an gerechnet, wird die Beschichtung klebfrei von der Matrize bzw. Trennträger abgezogen.

Die Polyurethanharnstoff-Schicht hat eine Stärke von 0,15 bis 0,45 mm.

Das beschichtete Flächenmaterial hat eine natürlichem Leder täuschend ähnliche Narbung, ist nach kurzer Zeit trocken, stapelbar und z.B. auf gängigen Schuhmaschinen verarbeitbar. Die Haftung zwischen Beschichtung und Spaltleder ist ausgezeichnet, der Griff angenehm trocken, weich.

Beispiel 3.12

474 g (400 mmol NCO) des Prepolymeren B (siehe unten) werden mit 130 g der nachfolgend beschriebenen Härter-Lösung auf einer Beschichtungsanlage analog Beispiel 3.11 verarbeitet.

400 g 2,4-Toluylendiamin
600 g Methylethylketon
400 g der erfindungsgemäß beschriebenen Pigmentsuspension 2.5
100 g des Verlaufmittels gemäß Beispiel 3.11

Überraschenderweise wurde gefunden, daß diese Suspension verschiedenartiger Produkte nicht mit einem mechanischen Rührwerk über einen längeren Zeitraum in Schwebe gehalten werden muß. Normalerweise neigen Pigmentdispersionen unter diesen Bedingungen zum Sedimentieren, was bei den erfindungsgemäßen Dispersionen nicht der Fall ist. Die erfindungsgemäße Pigmentformierung ist vorteilhafter, weil durch das nicht erforderliche mechanische Rühren keine Luftblasen eingerührt werden; im ausgehärteten Film fehlen sie also. Die aus dem Prepolymeren und der nicht mechanisch gerührten Härterlösung hergestellten Beschichtungen auf Flächenträgern zeichnen sich durch kompakte Filme aus, d.h. durch weniger Lufteinschlüsse in ihrer Festigkeit gestörten Filmwerte aus.

Die erhaltenen Filme bzw. Beschichtungen hatten folgende Eigenschaften im Vergleich zu einem mit einem mechanischen Rührwerk ausgestatteten Behälter:

| | Behälter mit Rührwerk | Behälter ohne Rührwerk |
|---|---|---|
| Zugfestigkeit | 10 MPa | 12 MPa |
| Bruchdehnung | 440 % | 500 % |
| Weiterreißfestigkeit | 22 daN | 24 daN |

Beispiel 3.13

640 g (888 mmol) des Prepolymeren C (siehe unten) werden mit 582 g einer Härterzubereitung innig vermischt und auf einen Trennträger aufgegossen.

Die Härterzubereitung entspricht folgender Zusammensetzung:

120 g Pigmentzubereitung aus Beispiel 2.5
600 g einer Mischung aus 170 g 3,3,5-Trimethyl-5-aminomethyl-cyclohexylamin (IPDA)
13 g Wasser und 417 g Methylethylketon werden 2 Stunden unter Rückfluß gekocht. Nach dem Abkühlen ist die Mischung als Härter gebrauchsfertig.

Von den 170 g (1 Mol) eingesetztem IPDA liegen in der Mischung vor:

a) 12,9 Mol-% als freies IPDA
b) 41,6 Mol-% als

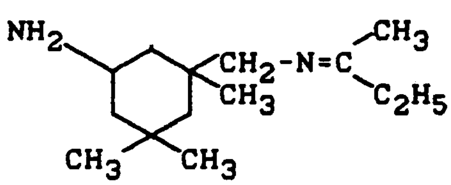

c) 45,5 Mol-% als Bis-methylethylketon-Ketimin von IPDA.
(Die Zusammensetzung wurde aus der gaschromatographischen Analyse der Mischung errechnet).

Außerdem sind in der Mischung noch insgesamt 37,9 g Wasser enthalten, die sich aus der Summe des Reaktionswassers und der zusätzlichen eingesetzten Menge von 13 g errechnen. (Die theoretisch benötigte Menge Wasser für die hydrolytische Aufspaltung der Ketimingruppen zu Aminogruppen beträgt 24,9 g). Das $NH_2$-Äquivalent der Härtermischung beträgt 600 g.

Beispiel 3.14

Die Rußzubereitung aus Beispiel 2.3 ist sehr gut für die Pigmentierung eines Zweikomponenten-Polyurethans für die Lackierung von Leder nach dem Kaltlackverfahren geeignet:
Zu einer Lösung, die aus 70 g eines vernetzbaren, wenig verzweigten Polyesters mit endständigen OH-Gruppen, 30 g Ethylacetat, 20 g Butylacetat, 20 g Cyclohexanon und 10 g Methylglykolacetat besteht, werden unter Rühren mit einem Schnellrührer bei einer Drehzahl von 200 bis 300 U/Min. 15 g der Rußzubereitung gegeben. Nach einer Rührzeit von 5 Minuten erhält man eine feinverteilte, stabile Pigmentdispersion, die nach Zusatz von 41 g eines Polyisocyanates, hergestellt durch Umsetzung von 1 Mol Trimethylolpropan und 3 Mol Toluylendiisocyanat, und eines Schwermetallsalzes als Beschleuniger, für die Lackierung von Leder nach dem Kaltlackverfahren geeignet ist. Die damit nach bekannten Verfahren hergestellten Lackleder sind gleichmäßig stippenfrei gefärbt. Der Schwarzton ist blumig und hochbrillant. Der verwendete Polyester wird aus Adipinsäure, Diethylenglykol und Trimethylolpropan hergestellt und besitzt ein mittleres Molgewicht von 1000 bis 3000.

Beispiel 3.15

Eine Pigmentpräparation, hergestellt nach DE-A 28 01 817, Beispiel 1, Seite 7 bis 8, Zeile 3, ist für eine alleinige Anwendung bestens geeignet. Es hat sich jedoch gezeigt, daß Mischungen von organischen mit anorganischen Pigmenten, die alle im gleichen Pigmentbindemittel zubereitet sind, ohne ständiges mechanisches Rühren nicht gleichmäßig vermischt bleiben. Besonders nach längerem ruhigen Stehenlassen der gebrauchsfertigen Lösungen ist ein Absetzen der spezifisch schwereren anorganischen Pigmente und ein Aufschwimmen der spezifisch leichteren organischen Pigmente zu beobachten.

Beispiel 3.16

Pigmentpräparationen von Kollodium enthaltenden fertigen Zubereitungen sind nur bedingt für den Einsatz auf flexiblen Unterlagen, wie sie Leder, Gewebe, Textilien und dergleichen darstellen, brauchbar.
Pigmentpräparationen mit Kollodium als Formierungsmittel, gegebenenfalls unter Zusatz von Weichmachern, beeinflussen die Eigenschaften der elastischen Zurichtmittel, z.B. auf Basis PU, für Leder und Lederimitate ungünstig. Nach längerem Lagern verhärten sie das Leder bzw. Lederimitat, verschlechtern den Griff und Narbenwurf, vermindern die Knickfestigkeiten und verschlechtern die Kältefestigkeit. Vor allem werden durch diese Pigmentpräparationen die Lichtechtheit und die Vergilbung unter Einfluß von Hitze und Amin sowie die Haftung negativ beeinflußt.

4. Herstellung der NCO-Prepolymeren für Beispiele 3.11 bis 3.13

Prepolymer A

60 Teile eines Polyesters aus Adipinsäure, Hexandiol und Neopentylglykol mit einer OH-Zahl von 64 (73,5 Äquivalente OH) werden 1 Stunde lang im Autoklaven bei 110 °C entwässert und bei 110 °C in Gegenwart von 18,2 Teilen Toluol mit 12,8 Teilen Toluylendiisocyanat (80 % 2,4- und 20 % 2,6-Isomeres, 147 Äquivalente) zu einem Prepolymeren mit einem NCO-Gehalt von 3,2 % umgesetzt. Viskosität bei 20 °C 4000 mPas und bei 70 °C 500 mPas.

Prepolymer B

500 g eines Polyesters aus Adipinsäure und Ethylenglykol (0,53 Mol) werden 1 Stunde lang bei 13 Torr und 110 °C entwässert. Der Polyester wird danach bei 110 °C 60 Minuten lang mit 132,5 g 4,4'-Diisocyanatodiphenylmethan (1,06 Mol NCO) umgesetzt. Man erhält ein Prepolymeres mit einem NCO-Gehalt von 3,54 %.

Prepolymer C

100 g eines linearen Polyethers aus 50 Gew.-% Ethylenoxid und 50 Gew.-% Propylenoxid (gestartet auf 1.2-Propylenglykol) mit der OH-Zahl 56 und 1000 g eines trifunktionellen Polyethers aus 27,5 Gew.-% Propylenoxid und 72,5 Gew.-% Ethylenoxid (gestartet auf Glycerin) mit der OH-Zahl 36, werden nach dem Entwässern mit 666 g 4,4'-Diphenylmethandiisocyanat bei 90 °C umgesetzt. Reaktionszeit 45 Minuten. NCO-Gehalt 5,8 % Äquivalentgewicht 724 g.

**Patentansprüche**

**1.** Pigmentpräparationen enthaltend
A) ein anorganisches und/oder organisches Pigment und eine flüssige Mischung aus
B) einem Polyurethan mit einem Molekulargewicht von 5 000 bis 50 000 enthaltend Butanonoxim-blockierte Isocyanatgruppen und gegebenenfalls C) einem oder mehreren für Pigmentpräparationen üblichen Zusätzen, wobei das Gewichtsverhältnis A:B = 1: (0.1 bis 50) ist.

**2.** Pigmentpräparationen gemäß Anspruch 1 enthaltend
A) 2-60 Gew.-% organisches Pigment, B) mindestens 5 Gew.-% Polyurethan und C) 5-90 Gew.-% Zusatz, insbesondere Lösemittel, wobei A) + B) + C) = 100 Gew.-%.

**3.** Pigmentpräparationen gemaß Anspruch 1 enthaltend
A) 5-30 Gew.-% organisches Pigment, B) mindestens 5 Gew.-% Polyurethan und C) 8-90 Gew.-% Zusatz, insbesondere Lösemittel, wobei A) + B) + C) = 100 Gew.-%.

**4.** Pigmentpräparationen gemäß Anspruch 1 enthaltend
A) 2-80 Gew.% anorganisches Pigment, B) mindestens 5 Gew.-% Polyurethan und C) 5-90 Gew.-% Zusatz, insbesondere Lösemittel, wobei A) + B) + C) = 100 Gew.-%.

**5.** Pigmentpräparationen gemäß Anspruch 1 enthaltend
A) 10-65 Gew.-% anorganisches Pigment, B) mindestens 5 Gew.-% Polyurethan und C) 8-90 Gew.-% Zusatz, insbesondere Lösemittel, wobei A) + B) + C) = 100 Gew.-%.

**6.** Pigmentpräparationen gemäß einem oder mehreren der Ansprüche 1-5, dadurch gekennzeichnet, daß das Molekulargewicht des Polyurethans 15 000-40 000 ist.

**7.** Pigmentpräparationen gemäß einem oder mehreren der Ansprüche 1-6, dadurch gekennzeichnet, daß das Polyurethan sterisch gehinderte Butanonoxim-blockierte Isocyanatgruppen aufweist.

**8.** Verwendung der Pigmentpräparationen gemäß einem oder mehreren der Ansprüche 1-7 zum Pigmentieren von Leder- und Kunstlederzurichtungsmitteln.

**Claims**

**1.** Pigment preparations which comprise A) an inorganic and/or organic pigment and a liquid mixture of B) a polyurethane having a molecular weight from 5,000 to 50,000 and containing butanonoxime-blocked isocyanate groups and, when appropriate, C) one or more additives customary for pigment preparations, the weight ratio A:B being 1:(0.1 to 50).

**2.** Pigment preparations according to Claim 1 which comprise A) 2-60% by weight of an organic pigment, B) at least 5% by weight of a polyurethane and C) 5-90% by weight of an additive, particularly a solvent, A) + B) + C) totalling 100% by weight.

**3.** Pigment preparations according to Claim 1 which comprise A) 5-30% by weight of an organic pigment, B) at least 5% by weight of a polyurethane and C) 8-90% by weight of an additive, particularly a solvent, A) + B) + C) totalling 100% by weight.

**4.** Pigment preparations according to Claim 1 which comprise A) 2-80% by weight of an inorganic pigment, B) at least 5% by weight of a polyurethane and C) 5-90% by weight of an additive, particularly

a solvent, A) + B) + C) totalling 100% by weight.

**5.** Pigment preparations according to Claim 1 which comprise A) 10-65% by weight of an inorganic pigment, B) at least 5% by weight of a polyurethane and C) 8-90% by weight of an additive, particularly a solvent, A) + B) + C) totalling 100% by weight.

**6.** Pigment preparations according to one or more of Claims 1-5, characterized in that the molecular weight of the polyurethane is 15,000-40,000.

**7.** Pigment preparations according to one or more of Claims 1-6, characterized in that the polyurethane has sterically hindered butanonoxime-blocked isocyanate groups.

**8.** Use of the pigment preparations according to one or more of Claims 1-7 for the pigmenting of leather and leathercloth dressing agents.

**Revendications**

**1.** Préparations de pigments contenant
A) un pigment inorganique et/ou organique et un mélange liquide de B) un polyuréthane ayant une masse moléculaire de 5 000 à 50 000 contenant des groupes isocyanate bloqués par une butanone-oxime et éventuellement de C) un ou plusieurs additifs classiques pour des préparations de pigments, le rapport en masse A:B étant de 1:(0,1 à 50).

**2.** Préparations de pigments selon la revendication 1, contenant
A) 2-60 % en masse de pigment organique, B) au moins 5 % en masse de polyuréthane et C) 5-90 % en masse d'additif, en particulier de solvants, avec A) + B) + C) = 100% en masse.

**3.** Préparations de pigments selon la revendication 1, contenant
A) 5-30 % en masse de pigment organique, B) au moins 5 % en masse de polyuréthane et C) 8-90 % en masse d'additif, en particulier de solvants, avec A) + B) + C) = 100% en masse.

**4.** Préparations de pigments selon la revendication 1, contenant
A) 2-80 % en masse de pigment inorganique, B) au moins 5% en masse de polyuréthane et C) 5-90 % en masse d'additif, en particulier de solvants, avec A) + B) + C) = 100 % en masse.

**5.** Préparations de pigments selon la revendication 1, contenant
A) 10-65 % en masse de pigment inorganique, B) au moins 5% en masse de polyuréthane et C) 8-90 % en masse d'additif, en particulier de solvants, avec A) + B) + C) = 100 % en masse.

**6.** Préparations de pigments selon l'une ou plusieurs des revendications 1-5, caractérisées en ce que la masse moléculaire du polyuréthane est de 15 000-40 000.

**7.** Préparations de pigments selon l'une ou plusieurs des revendications 1-6, caractérisées en ce que le polyuréthane présente des groupes isocyanate encombrés stériquement, bloqués par une butanone-oxime.

**8.** Utilisation des préparations de pigments selon l'une ou plusieurs des revendications 1-7 pour la pigmentation de produits pour l'apprêt de cuirs ou de cuirs synthétiques.